Europäisches Patentamt

(19) European Patent Office

Office européen des brevets

(11) Publication number: **0 011 379**
**B1**

## (12) EUROPEAN PATENT SPECIFICATION

(45) Date of publication of patent specification: **19.01.83**

(51) Int. Cl.³: **B 60 N 1/06**

(21) Application number: **79302191.6**

(22) Date of filing: **12.10.79**

(54) A vehicle seat having a shoulder support.

(30) Priority: **18.11.78 GB 4517378**

(43) Date of publication of application:
**28.05.80 Bulletin 80/11**

(45) Publication of the grant of the patent:
**19.01.83 Bulletin 83/3**

(84) Designated Contracting States:
**AT DE NL SE**

(56) References cited:
**AT - B - 213 721**
**DE - U - 1 859 935**
**FR - A - 2 148 736**

(73) Proprietor: **UOP Inc.**
**10 UOP Plaza Algonquin & Mt. Prospect Roads**
**Des Plaines Illinois 60016 (US)**

(72) Inventor: **Barley, Geoffrey Wilfred**
**3 Hall Close Beech Lane**
**Kislingbury, Northampton (GB)**
Inventor: **Moorhouse, David**
**"Inglenook" Farthingstone**
**near Towcester Northamptonshire (GB)**

(74) Representative: **Taylor, Derek George et al,**
**Mathisen, Macara & Co. Lyon House Lyon Road**
**Harrow, Middx. HA1 2ET (GB)**

Courier Press, Leamington Spa, England.

A vehicle seat having a shoulder support

This invention relates to vehicle seats and particularly, but not exclusively, to tractor seats.

When a tractor driver is carrying out ploughing operations or other operations in which he sits in a twisted round position within the seat, there is a need for his shoulder nearest the backrest of the seat to be given improved support.

It is known from French Patent Specification 2,148,736 to provide a vehicle seat having a lower backrest secured to the base of the seat and an upper backrest hinged to the lower backrest by a hinge device which permits the upper backrest to be moved between an upright position and a horizontal position and to be locked in each position.

German Utility Model 1,859,935 discloses a locking hinge device between the lower end of a backrest and the base of a vehicle seat in which a hinge pin on an upper shank portion of the device can be lifted within a slot in a lower shank portion of the device to unlock the device and allow the upper shank portion and the backrest to be tilted backwards.

It is also known from Austrian Patent Specification 213,721 to provide a seat for a vehicle, the seat having a backrest and a hinge device mounting the backrest for tilting movement from a normal position to a backwardly-tilted position, the hinge device comprising two shank portions which are pivotally connected together in end-to-end relationship by a hinge pin. In this known device, the hinge pin which bridges the forked upper end of the lower shank portion passes through an elongate slot in the upper shank portion whereas the lower end of the upper shank portion is received in a shallow socket in the lower shank portion. The construction of the forked upper end of the lower shank is such as to leave protruding sharp edges of the hinge device in both positions of the hinge device which could be particularly dangerous on a vehicle seat for a tractor or other vehicles designed for use over rough terrain. A requirement exists for a simple hinge construction suitable for use in particular on a tractor.

This requirement is satisfied in accordance with the invention in that a locking sleeve which, in its operative position, fits closely around the two shank portions but which is movable longitudinally with respect to one of said shank portions until it is clear of the other shank portion so that said shank portions are free to pivot with respect to one another.

The invention will now be particularly described with reference to the accompanying drawings in which:

Figure 1 is a vertical section through the backrest of a vehicle seat having a shoulder support mounted thereon by means of a hinge device; and

Figure 2 is a vertical section corresponding to that of Figure 1, but showing a modified hinge device.

As shown in the drawings, the backrest 10 of the vehicle comprises a backpan 11 the forward face of which is covered by upholstery 12, such as a back cushion.

A shoulder support 13 in the form of a sheet metal support pan 14 having upholstery 15 on its forward face, which likewise will normally be a plastic foam cushion, is mounted on the backrest pan adjacent the upper end thereof by means of a hinge device 116, or prefera. by two similar hinge devices disposed ad.. ent opposite sides of the shoulder support and having a common pivot axis. The or each hinge device includes a pillar 117.

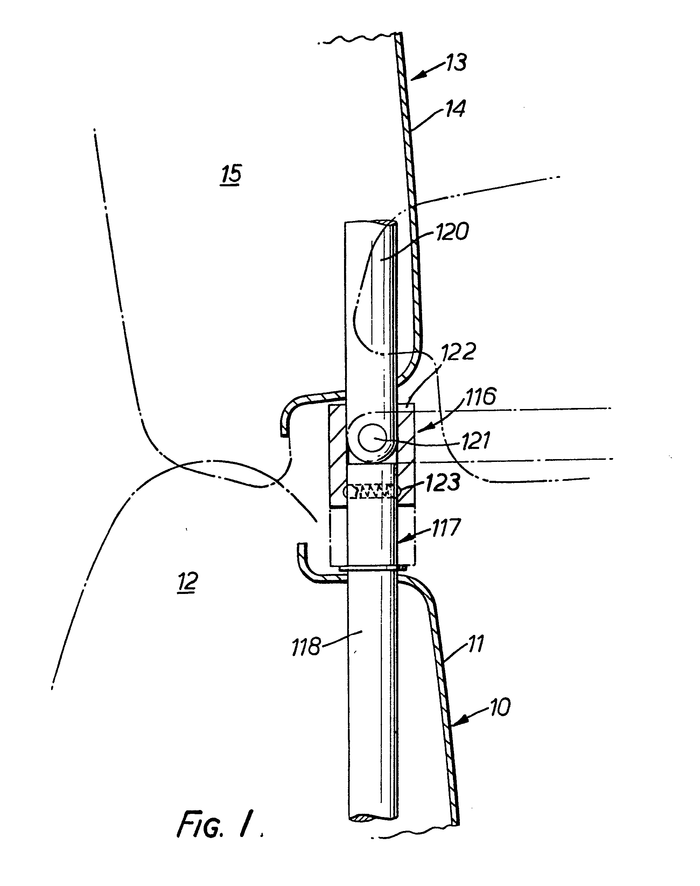

The or each pillar 117 has a lower circular-section shank portion 118 supported on the backrest, an upper circular-section shank portion 120 secured to the shoulder support and hinged by hinge pin 121 to the lower shank portion, and a rigid sleeve 122 which fits closely around the pillar shank 117. The sleeve is slidable along the pillar shank from a first position, shown in full line in Figure 1, in which it embraces the adjacent parts of both the upper and lower shank portions 118, 120 to lock the hinge 121 against operation, to a second position, shown in dotted line, in which it is clear of the upper shank portion and so leaves the shoulder support 13 free for pivotal movement. A sprung detect 123 is operative to secure the sleeve in the upper position.

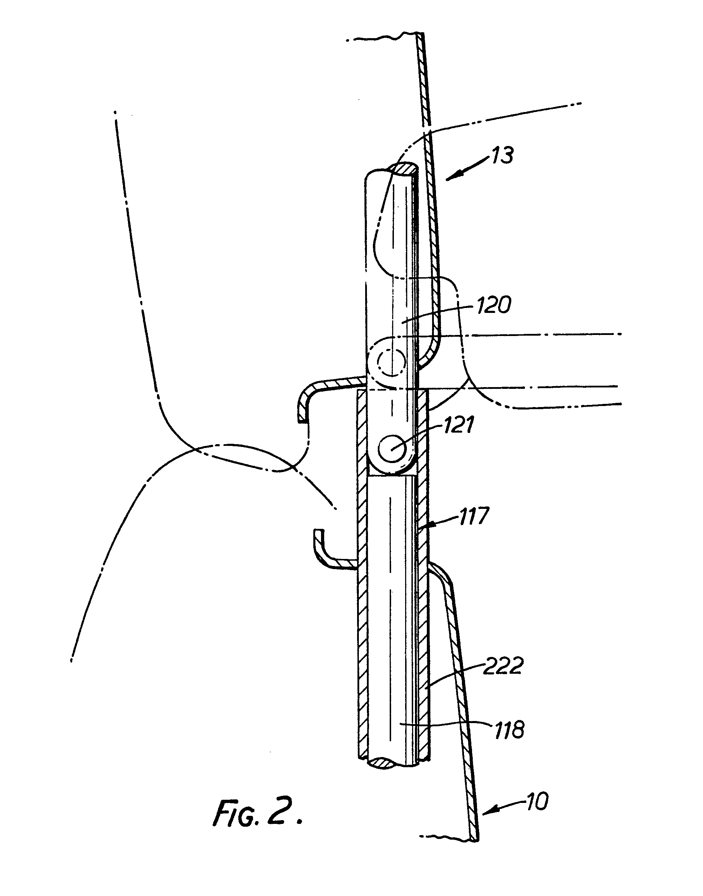

In the modified embodiment of Figure 2 (in which like parts are referred to by the reference numerals used in Figure 1) each pillar shank 117 which is formed as described in connection with the embodiment of Figure 1, is mounted for longitudinal movement within a rigid support tube or sleeve 222 secured to the backrest pan, the pillar fitting closely within the tube 222. The length of the pillar shank is such that when it rests on the bottom of the support tube, or is otherwise fully inserted in the support tube 222, the hinge pin 121 is located within the upper end of the tube 222 and the hinge is thereby rendered inoperable. If however, the shoulder support 13 is lifted to raise the upper shank portion 120 clear of the support tube 222, the shoulder support can be hinged rearwardly.

**Claims**

1. A seat for a vehicle, the seat having a backrest (10), a shoulder support (13) and a lockable hinge assembly including at least one hinge device mounting the shoulder support (13) on the backrest (10) for tilting movement from a normal position in which it forms an upward extension of the backrest (10) to a backwardly-tilted position in which it forms a rest, suitable for example in supporting an arm and shoulder of the seat occupant when reversing or ploughing, the hinge device comprising two shank portions (118, 120) which are pivotally connected together in end-to-end relationship by a hinge pin (121) and are secured respectively to the backrest (10) and the shoulder support (13), characterised by a locking sleeve (122 or 222) which, in its operative position, fits closely around the two shank portions (118, 120) but which is movable longitudinally with respect to one of said shank portions (118) until it is clear of the other shank portion (120) so that said shank portions (118, 120) are free to pivot with respect to one another.

2. A seat according to claim 1, characterised in that the locking sleeve (222) is secured to said backrest (10), and one shank portion (120) is secured to said shoulder support (13) (or vice versa) so that by lifting the shoulder support away from the backrest, the locking sleeve (222) and said one shank portion (120) are moved clear of each other.

**Revendications**

1. Siège pour un véhicule, notamment pour un tracteur agricole, possédant un dossier (10), un appui-épaules (13) et un dispositif d'articulation comprenant au moins une articulation et par lequel l'appui-épaules (13) est monté basculant sur le dossier (10) entre une position normale où il forme un prolongement du dossier (10) et une position basculée vers l'arrière où il forme un appui, par exemple pour un bras et une épaule de l'occupant du siège pendant le labourage ou le retournement de la terre, l'articulation étant constituée d'au moins deux portions de tige (118, 120) qui sont disposées bout à bout et reliées l'une à l'autre par un axe d'articulation (121), l'une des portions de tige étant solidaire du dossier (10) et l'autre étant solidaire de l'appui-épaules (13), caractérisé par un manchon de blocage (122 ou 222) qui s'ajuste autour des deux portions de tige (118, 120) en position de blocage de l'articulation et est déplaçable longitudinalement par rapport à l'une (118) des portions de tige pour pouvoir être dégagé de l'autre (120) portion de tige et permettre ainsi l'inclinaison de l'une d'elles (118, 120) par rapport à l'autre.

2. Siège selon la revendication 1, caractérisé en ce que le manchon de blocage (222) est solidaire du dossier (10) et une portion de tige (120) est solidaire de l'appui-épaules (13) (ou inversement), de sorte que le soulèvement de l'appui-épaules, correspondant à son écartement du dossier, dégage le manchon de blocage (222) et ladite portion de tige (120) l'un de l'autre.

**Patentansprüche**

1. Sitz für ein Fahrzeug, mit einer Rückenlehne (10), einer Schulterstütze (13) und einer arretierbaren Gelenkverbindung mit wenigstens einem die Schulterstütze (13) auf der Rückenlehne lagernden Gelenk zum Verschwenken der Schulterstütze von einer normalen Stellung, in welcher sie eine aufwärts gerichtete Verlängerung der Rückenlehne (10) bildet, in eine rückwärts gekippte Stellung, in welcher sie eine Abstützung etwa für einen Arm und die Schulter des Benutzers des Sitzes etwa beim Rückwärtsfahren oder Pflügen darstellt, wobei das Gelenk zwei Strebenteile (118, 120) aufweist, welche mittels eines Gelenkstifts (121) in gegenseitiger Verlängerung gelenkig miteinander verbunden und an der Rückenlehne (10) bzw. an der Schulterstütze (13) befestigt sind, gekennzeichnet durch eine Verriegelungsmuffe (122 oder 222), welche in ihrer Arbeitsstellung die beiden Strebenteile (118, 120) eng umschließt, dabei jedoch in Längsrichtung des einen Strebenteils (118) bewegbar ist, bis sie vom anderen Strebenteil (120) frei ist, so daß die Strebenteile (118, 120) dann relativ zueinander frei verschwenkbar sind.

2. Sitz nach Anspruch 1, dadurch gekennzeichnet, daß die Verriegelungsmuffe (222) an der Rückenlehne (10) und ein Strebenteil (120) an der Schulterstütze (13) befestigt ist (oder umgekehrt), so daß die Verriegelungsmuffe (222) und das eine Strebenteil (120) durch Anheben der Schulterstütze weg von der Rückenlehne zur gegenseitigen Freigabe auseinander bewegbar sind.

**0011379**

FIG. 1.

FIG. 2.